# EUROPEAN PATENT APPLICATION

(11) **EP 2 584 830 A1**
(43) Date of publication of application: **24.04.2013**
(21) Application number: 11360045.6
(22) Date of filing: 03.10.2011
(51) Int. Cl.: H04W 28/26, H04W 76/02, H04W 72/04, H04W 92/10

(54) **Communication link establishment**

(71) Applicant: Alcatel Lucent, 75007 Paris (FR)
(72) Inventor: Hou, Jindong, Westlea, Swindon Wiltshire SN5 7BY (GB); Wong, Shin Horng, Chippenham Wiltshire SN15 3YB (GB); Zhang, Jing, Kanata Ontario K2T 1G3 (CA); Mondet, Mickael, 22700 Louannec (FR)
(74) Representative: Script IP Limited

(57) **Abstract**

A method of establishing a communication link between a network access node and user equipment on at least one common radio channel in a wireless telecommunication network, user equipment operable to perform that method and a computer program product operable to perform that method. The method comprises: receiving a data transmission from the network access node; directly triggering, within user equipment layer one, initiation of a request for establishment of communication with said network access node on said at least one common radio channel; and transmitting said request to said network access node. According to methods described, a UE may be operable to implement methods of establishing communications links which allow early and proactive common EDCH acquisition. Such methods aim to minimise both uplink and downlink service delay, particularly in cases where user equipment is operable to autonomously decide a downlink transmission is likely to cause an uplink transmission from user equipment as a response. Advanced aspects described herein aim to optimising user equipment behaviour by enabling cross-layer interactions.

## Description

### FIELD OF THE INVENTION

The present invention relates to a method of establishing a communication link on a common channel in a wireless telecommunications network, user equipment operable to carry out that method and a computer program product operable to carry out that method.

### BACKGROUND

Wireless telecommunications systems are known. In a cellular system, radio coverage is provided to user equipment; for example, mobile telephones, in areas known as cells. A base station is located in each cell to provide radio coverage. User equipment in each cell receives information and data from the base station and transmits information and data to the base station.

Information and data transmitted by the base station to the user equipment occurs on channels of radio carriers known as downlink carriers. Information and data transmitted by user equipment to the base station occurs on uplink data channels of radio carriers known as uplink carriers.

The widespread popularity of smartphones has caused a significant change to data traffic profiles carried in known telecommunications networks. The data traffic profile of user equipment is becoming increasingly discontinuous or "bursty" and traditional transmission mode methods, designed primarily for continuous data transmission, may not aid overall efficient network operation or may be unsuitable for such a change to a typical data traffic profile.

Accordingly, it is desired to provide an improved technique for establishing a communication link on a common channel in a wireless telecommunications network in a wireless communications network.

### SUMMARY

A first aspect provides a method of establishing a communication link between a network access node and user equipment on at least one common radio channel in a wireless telecommunication network, the method comprising: receiving a data transmission from the network access node; directly triggering, within user equipment layer one, initiation of a request for establishment of communication with the network access node on the at least one common radio channel; and transmitting the request to the network access node.

User equipment may operate in various modes in, for example, a UMTS telecommunications network. On initial turning on of user equipment in a cell, it will typically operate in "idle mode". Once it synchronises and attaches itself to a base station, it gains radio resource control (RRC) connection and is referred to as being in a connected mode. User equipment in idle mode does not have a radio resource control connection. If user equipment is RRC connected it can be in one of five different RRC states: Cell_DCH, Cell_FACH, Enhanced Cell_FACH, Cell_PCH, or URA_PCH states.

User equipment typically moves into Cell_DCH state when its data traffic is high, since in such a state the user equipment is allocated a dedicated channel on which to transmit and receive data from a base station. In a UMTS network architecture, user equipment can be in Cell_DCH state when it is expected to have a high volume of traffic. Operation in a Cell_DCH state is typically highly demanding of battery power. User equipment may be operable, when not in a Cell_DCH state, to use a random access channel (RACH) on the uplink and a base station will operate to communicate with user equipment using a forward access channel (FACH). RACH and FACH have typically a small data carrying ability and in WCDMA or UMTS systems a capability for user equipment and base stations to operate and communicate data traffic therebetween using a shared or common resource on downlink and uplink when user equipment is in a Cell_FACH state has been introduced.

In the uplink the data traffic transmission occurs using an enhanced dedicated channel and in the downlink it is sent on a high-speed downlink shared channel. Such channels allow user equipment and base stations to communicate and to transmit longer and larger data packets between themselves for a time without the need for user equipment to enter a Cell_DCH state. Such arrangements allow user equipment to remain in a Cell_FACH state for longer without transitioning to more dedicated RRC states, thereby allowing a power consumption saving.

It will be appreciated that for data traffic which is particularly bursty in nature, operation in a full Cell_DCH state may be particularly wasteful of battery at the user equipment and also of available radio resource, thus the ability to handle bursty traffic without entering a more dedicated state may be beneficial to overall network operation.

The widespread popularity of "smartphones" in commercial networks has led to a change in typical data traffic profile carried on data carriers. The loading of web pages and subsequent user reading, for example, has led to a data traffic profile which has become substantially discontinuous or bursty, and traditional communication link establishment techniques designed primarily for continuous data transmission may not offer a particularly efficient or prompt means to handle bursty traffic. This can lead to a delay in network response and user experience. In particular, in a UMTS radio network, for example, utilisation of legacy common channel acquisition techniques designed for continuous data transmission will typically lead to an unwanted service delay.

The first aspect recognises that typically user equipment are not operable to acquire a common EDCH until internal user equipment (UE) signaling indicates to the UE that it has uplink data or signalling in a buffer to transfer to a base station. As a consequence, if a downlink message from a base station to user equipment requires feedback or response on a RACH/FACH UE is not typically immediately operable to provide that feedback or response and has to wait to acquire a common channel, for example, E-DCH until it successfully decodes the downlink message and implements an internal triggering process to enable uplink transmissions.

Such UE behavior may cause unwanted service delay. In most cases, downlink data transfer to user equipment will trigger an uplink data or feedback message transfer (for example: PS I/B and SRB 2-4 uses RLC-AM, and L2 ACK is needed for user traffic; CCCH and SRB1 messages use RLC-UM, and normally require response, such as RRC Connection Setup, Cell / URA Update Confirm).

Thus typical UE behavior according to which a common EDCH is only acquired after a long internal trigger process can result in unnecessary latency for UE uplink common E-DCH transfer (i.e. "*Time to First Byte*"/time to data traffic transmission) together with an unwanted delay in UE feedback (for example, ACK/CQI) transmission.

According to methods described, a UE may be operable to implement methods of establishing communications links which allow early and proactive common EDCH acquisition. Such methods aim to minimise both uplink and downlink service delay, particularly in cases where user equipment is operable to autonomously decide a downlink transmission is likely to cause an uplink transmission from user equipment as a response. Advanced aspects described herein aim to optimising user equipment behaviour by enabling cross-layer interactions.

According to one embodiment, the user equipment is operating in a Cell_FACH RRC state.

According to one embodiment, the method allows for bypassing indirect multi-layer user equipment initiation of a request for establishment of communication with the network access node on the at least one common radio channel. Accordingly, preventing an inefficient multi-layer triggering process at user equipment allows for a reduction in latency of response by user equipment operable to perform according to such methods.

By establishing acquisition of a common channel as soon as a downlink transmission is received, rather than requiring a further internal triggering process to be activated, benefits of latency reduction can be gained for both uplink data transmission and feedback transmissions.

By taking steps to acquire a common channel immediately on reception of a downlink transmission, latency of uplink data transmission from user equipment is reduced since the common channel resource process is brought forward and it is likely that by the time there is data to transmit, a common channel has already been allocated by a base station to user equipment, and the user equipment may have taken all steps to ensure that common channel is ready for use. Furthermore, by bringing forward common channel (for example: eRACH/SYNC AA/common E-DCH) acquistion, the corresponding delay in downlink channel (for example, HS-DPCCH) feedback may also be reduced correspondingly.

In one embodiment, the request comprises a request for establishment of communication on at least one common radio channel configured for transmission of uplink data traffic. Accordingly, the request may comprise a request for a common EDCH channel.

In one embodiment, the request comprises a request for establishment of communication on at least one common radio channel configured for transmission of downlink feedback information. Accordingly, a request for a feedback channel may be substantially independent to a request for a data transmission channel. The request may comprise a request for an HS-DPCCH channel.

In one embodiment, the at least one common radio channel configured for transmission of downlink feedback information is associated with at least one common radio channel configured for transmission of uplink data traffic. Accordingly, the feedback channel may piggyback on an uplink data channel.

In one embodiment, the request for establishment comprises an indication of a unique user equipment identifier. Typically HS-DPCCH feedback starts only after a collision resolution phase in establishing common channel acquisition. That phase ensures (when more than one user equipment is attempting to obtain a given common channel) that any possible ambiguity regarding which user equipment has been successfully allocated a common channel is resolved prior to user equipment beginning transmissions. Typical operation allows feedback to piggyback on a common data channel (for example, HS-DPCCH is associated with common E-DCH). Thus, once a base station successfully receives an uplink message on the common channel which includes a user equipment unique uplink identity, a base station is operable to work out which specific UE is occupying the common channel, and thus the associated feedback channel. Thus any ambiguity is removed. According to some embodiments, feedback may be provided in a manner that does not piggyback upon data traffic transmissions on a common channel. Such embodiments require that other means must be found to identify which specific user equipment is using a given shared or common channel on which to send feedback to a base station.

In one embodiment, the request for establishment comprises an indication of a unique user equipment identifier for each least one common radio channel requested. In one embodiment, an indication of a unique user equipment identifier is encoded within a transmission to be made on the least one common radio channel requested. In one embodiment, the request comprises an indication of a unique user equipment identifier encoded within a physical control channel message.

In one embodiment, it is assumed that MIMO techniques will not be utilised in respect of user equipment operating in a CELL_FACH state. A PCI field (2-bit) is provided for MIMO when user equipment is operating in MIMO in a Cell_Dch state. That PCI field can be reused and re-interpreted for user equipment operating in a Cell_Fach state to indicate user equipment identity.

For example, PCI "00" (or any permutation out of 00, 01, 10, 11) for user equipment operating according to an eFACH state shall be re-interpreted at a base station as being indicative of , for example, "*Remaining MSB (Most Significant Bit) 16bits out of 18-bit ACK-CQI field is E-RNTI*". The remaining permutation of the 2-bit PCI field can be reserved for other use.

Embodiments may thus allow user equipment to operate to provide "early" feedback on a stand-alone HS-DPCCH, by ensuring that user equipment is operable to send a "UE-ID" HS-DPCCH message to a base station, such that the base station knows that user equipment (identified by its E-RNTI) is using the stand-alone HS-DPCCH channel to transmit feedback. Accordingly, user equipment can then send normal ACK/NACK/CQI message on a stand-alone HS-DPCCH (feedback channel).

In one embodiment, the request comprises an indication of a unique user equipment identifier encoded within an unused feedback common radio channel associable with the user equipment.

According to some embodiments, user equipment is operable to use a secondary feedback channel (HS-DPCCH_2) in addition to a first feedback channel (HS-DPCCH_1). The secondary feedback channel is created and used to transfer a user equipment identifier (e.g. E-RNTI) to a base station. That second feedback channel may be provided for user equipment operating according to a multi channel regime when in a cell_DCH state. Multi channel operation will never be used whilst user equipment is in a CELL_FACH state and any such secondary feedback channel becomes available for reuse in user equipment CELL_FACH state to carry a user equipment identity (for example, E-RNTI).

The secondary HS-DPCCH has the exactly same format as the current first HS-DPCCH: the same 128 SF, the same uplink scrambling code, the same channelisation code C_{ch}, _{128, 16}, the same format for ACK/CQI/PCI information field, etc. However, HS-DPCCH_1 and HS-DPCCH_2 are transmited on Q and I respectively so that a base station can that the feedback channels belong to the same user equipment.

According to such an embodiment, 16-bits out of an available 20-bit information field on the feedback channel (for example, HS-DPCCH) are used to convey user equipment identity (for example, E-RNTI). Since HS-DPCCH_1 and HS-DPCCH_2 are transmitted on branch Q and I using the same uplink scrambling code, correlation at the base station ensures that feedback transferred on HS-DPCCH_1 identified as being from a specific user equipment can be conveyed directly to feedback received on HS-DPCCH_2.

Thus if user equipment is operable to implement a method which provides for early feedback on a stand-alone feedback channel, for example, HS-DPCCH, that user equipment operates to sends a UE identifier (e.g. E-RNTI) on the second feedback channel, for example, HS-DPCCH_2, to a base station.

In some embodiments, in order to increase such message reception reliability at a base station, a UE can repeat the transmission of UE-identifier (for exmple, E-RNTI) several times on the second feedback channel (for example, HS-DPCCH_2). In other embodiments, the user equipment may be operable to periodically send the UE-identifier on the second feedback channel. After a predetermined time period, user equipment may be operable to assume that the base station has received its UE-identifier (for example, E-RNTI) on the second feedback channel and begin sending normal ACK/NACK/CQI feedback on the 1^{st} HS-DPCCH after expiration of that predetermined time period.

In one embodiment, the method comprises: determining whether initiation of the request is required based on a determination of a nature of the data transmission received from the network access node. Accordingly, user equipment is operable to commence common channel acquisition procedures in dependence upon a determined downlink message type determined by the user equipment. For example, user equipment may be operable to start eRACH / SYNC AA and acquire common EDCH resource as soon as it is scheduled by HS-SCCH indication for HS-DSCH reception.

According to some embodiments "early acquistion" shall be performed only when there is an anticipated need for an uplink resource due to the nature of a determined message flow and/or uplink load. For example, if user equipment is expecting continued uplink or downlink activity, early acquisition techniques may be triggered. If user equipment receives an indication that large amount of downlink data is expected and will last for a while, or the user equipment has transmitted an RRC Connection Request in middle of RRC Connection Setup procedure, early acquisition techniques allow for reduced delay in transmission of follow-up uplink messages (for example, RRC Connection Setup Complete and data traffic) via acquired common channel resource (for example, common E-DCH) and uplink feedback (via, for example, HS-DPCCH) is established.

According to some embodiments, if user equipment does not anticipate a need for uplink resource, the user equipment may be operable to prevent, or not initialise, early acquisition. For example, if user equipment is operable to send a periodical Cell Update, it typically expects a single "Cell Update Confirm" message followed by no further uplink or downlink messages. In such a case, user equipment is operable such that if user equipment detects reception of a downlink transmission it can guess that it is likely to be a CUC transmission and thus there may be no need to commence early common resource acquisition.

Such embodiments allow user equipment to implement service-aware cross-layer optimisation techniques in relation to early common channel acquisition techniques.

In one embodiment, the method comprises: predicting, based on transmissions received and transmitted by said user equipment, that reception of said data transmission is expected and triggering said initiation of a request for establishment of communication with said network access node on said at least one common radio channel based upon said prediction. In some embodiments, if user equipment is anticipating a service reply message in the downlink (for example, a Cell Update Confirm - CUC), even if it does not detect a message from a base station when expected, it may be operable to start early common channel acquistion when a context timer expires. In particular, a problem with detected HS-SCCH/HS-DSCH is that, due to an absence of CQI or in a case where a link between is experiencing a bad radio condition, the HS-SCCH/HS-DSCH may not be detected. Then the UE may not know there was a HS-SCCH. According to embodiments in which a context timer is provided, even if user equipment fails to detect a HS-SCCH/HS-DSCH, it is operable to begin common channel acquisition. Useful feedback provided via early common E-DCH acquisition can, in turn, help improve downlink transmission quality for successful communication links without service interruption.

A second aspect provides a computer program product operable, when executed on a computer, to perform the method of the first aspect.

A third aspect provides user equipment operable to establish a communication link with a network access node on at least one common radio channel in a wireless telecommunication network, the user equipment comprising: reception logic operable to receive a data transmission from the network access node; triggering logic operable to directly trigger, within user equipment layer one, initiation of a request for establishment of communication with the network access node on the at least one common radio channel; and transmission logic operable to transmit the request to the network access node.

In one embodiment, the user equipment is operating in a Cell_FACH RRC state.

In one embodiment, the user equipment comprises bypass logic operable to bypass indirect multi-layer user equipment of initiation of a request for establishment of communication with the network access node on the at least one common radio channel.

In one embodiment, the request comprises a request for establishment of communication on at least one common radio channel configured for transmission of uplink data traffic.

In one embodiment, the request comprises a request for establishment of communication on at least one common radio channel configured for transmission of downlink feedback information.

In one embodiment, the at least one common radio channel configured for transmission of downlink feedback information is associated with at least one common radio channel configured for transmission of uplink data traffic.

In one embodiment, the request for establishment comprises an indication of a unique user equipment identifier.

In one embodiment, the request for establishment comprises an indication of a unique user equipment identifier for each least one common radio channel requested.

In one embodiment, the user equipment further comprises encoding logic operable to encode an indication of a unique user equipment identifier within a transmission to be made on the least one common radio channel requested.

In one embodiment, the user equipment further comprises encoding logic operable to encode an indication of a unique user equipment identifier within a physical control channel message.

In one embodiment, the user equipment further comprises encoding logic operable to encode an indication of a unique user equipment identifier within an unused feedback common radio channel associable with the user equipment.

In one embodiment, the user equipment further comprises: determination logic operable to determine whether initiation of the request is required, based on a determination of a nature of the data transmission received from the network access node.

In one embodiment, the user equipment further comprises: prediction logic operable to predict, based on transmissions received and transmitted by the user equipment, that reception of data transmission from a network access node is expected; and trigger logic, operable to trigger the initiation of a request for establishment of communication with the network access node on the at least one common radio channel based upon the prediction.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments will now be described further with reference to the accompanying drawings in which:
Figure 1 illustrates the main components of a telecommunications network according to one embodiment;
Figure 2 illustrates schematically, by means of a network signalling diagram, a method of acquiring a common channel in a wireless communication network;

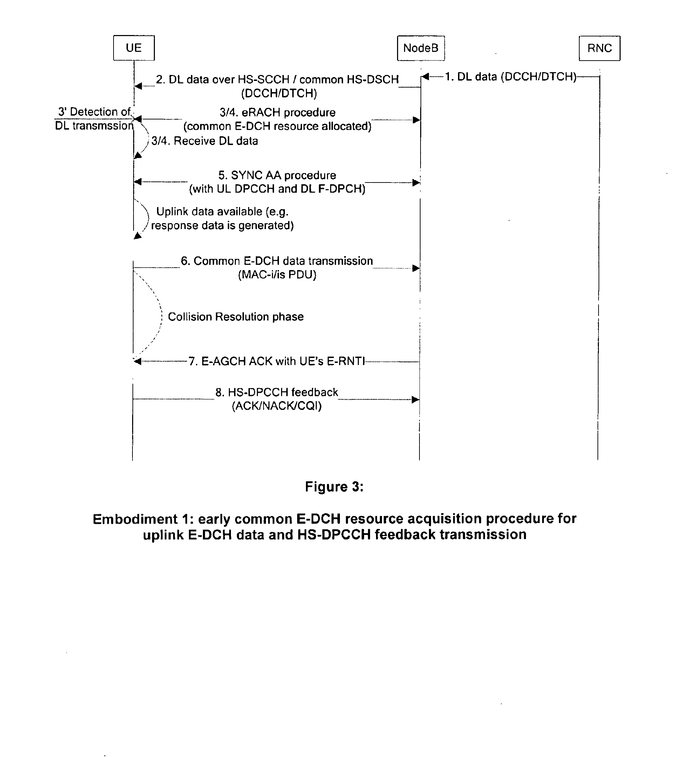

Figure 3 illustrates schematically, by means of a network signalling diagram, a method of acquiring a common channel in a wireless communication network according to one embodiment;
Figure 4a and Figure 4b illustrate schematically a method of coding information at user equipment;
Figure 5 illustrates schematically, by means of a network signalling diagram, a method of acquiring a common channel in a wireless communication network according to one embodiment;
Figure 6 illustrates schematically, by means of a network signalling diagram, a method of acquiring a common channel in a wireless communication network according to one embodiment;
Figure 7 illustrates schematically a method of acquiring a common channel in a wireless communication network according to one embodiment; and
Figure 8 illustrates schematically a method of acquiring a common channel in a wireless communication network according to one embodiment.

### DESCRIPTION OF THE EMBODIMENTS

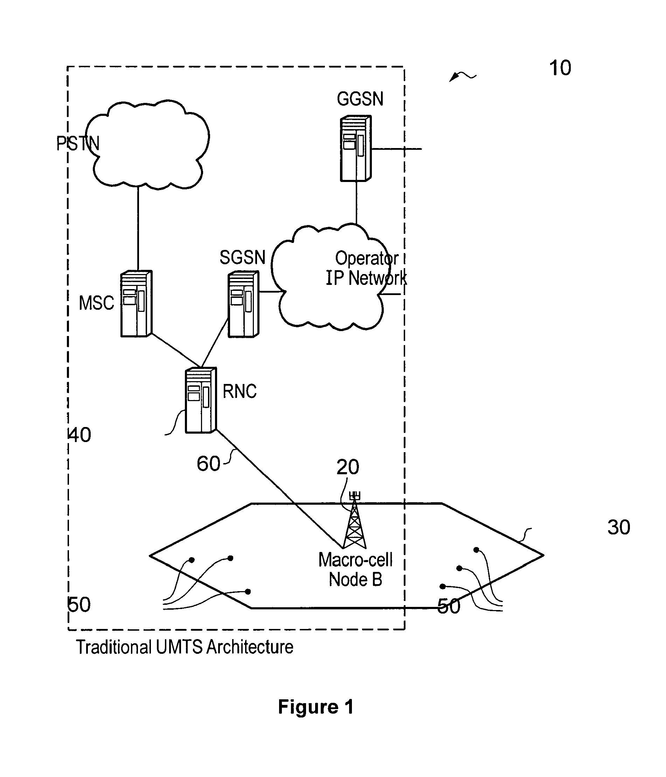

Figure 1 illustrates schematically the main components of a wireless telecommunications system 10 according to one embodiment. User equipment 50 roam through the wireless telecommunications system. Base stations 20 are provided which support areas of radio coverage 30. A number of such base stations 20 are provided and are distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically, a different antenna within a base station supports each associated sector. Each base station 20 has multiple antennas. It will be appreciated that Figure 1 illustrates a small sub-set of a total number of user equipment and base stations that may be present in a typical communications system.

The wireless communications system is managed by a radio network controller (RNC) 40. The RNC 40 controls operation of the wireless telecommunications system by communicating with a plurality of base stations over a backhaul communications link 60. The RNC also communicates with user equipment 50 via each base station and, thus, effectively manages a region of the entire wireless communications network 10. User equipment communicates with base stations 20 by transmitting data and information on channels known as uplink or reverse channels, and a base station 20 communicates with user equipment 50 by transmitting data and information on radio channels known as downlink or forward channels.

User equipment may operate in various modes in, for example, a UMTS telecommunications network. On initial turning on of user equipment in a cell, it will typically operate in "idle mode". Once it synchronises and attaches itself to a base station, it gains radio resource control (RRC) connection and is referred to as being in a connected mode. User equipment in idle mode does not have a radio resource control connection. If user equipment is RRC connected it can be in one of five different RRC states: Cell_DCH, Cell_FACH, Enhanced Cell_FACH, Cell_PCH, or URA_PCH states.

User equipment typically moves into Cell_DCH state when its data traffic is high, since in such a state the user equipment is allocated a dedicated channel on which to transmit and receive data from a base station. In a UMTS network architecture, user equipment can be in Cell_DCH state when it is expected to have a high volume of traffic. Operation in a Cell_DCH state is typically highly demanding of battery power. User equipment may be operable, when not in a Cell_DCH state, to use a random access channel (RACH) on the uplink and a base station will operate to communicate with user equipment using a forward access channel (FACH). RACH and FACH have typically a small data carrying ability and in WCDMA or UMTS systems a capability for user equipment and base stations to operate and communicate data traffic therebetween using a shared or common resource on downlink and uplink when user equipment is in a Cell_FACH state has been introduced.

In the uplink the data traffic transmission occurs using an enhanced dedicated channel and in the downlink it is sent on a high-speed downlink shared channel. Such channels allow user equipment and base stations to communicate and to transmit longer and larger data packets between themselves for a time without the need for user equipment to enter a Cell_DCH state. Such arrangements allow user equipment to remain in a Cell_FACH state for longer without transitioning to more dedicated RRC states, thereby allowing a power consumption saving.

It will be appreciated that for data traffic which is particularly bursty in nature, operation in a full Cell_DCH state may be particularly wasteful of battery at the user equipment and also of available radio resource, thus the ability to handle bursty traffic without entering a more dedicated state may be beneficial to overall network operation.

The widespread popularity of "smartphones" in commercial networks has led to a change in typical data traffic profile carried on data carriers. The loading of web pages and subsequent user reading, for example, has led to a data traffic profile which has become substantially discontinuous or bursty, and traditional communication link establishment techniques designed primarily for continuous data transmission may not offer a particularly efficient or prompt means to handle bursty traffic. This can lead to a delay in network response and user experience. In particular, in a UMTS radio network, for example, utilisation of legacy common channel acquisition techniques designed for continuous data transmission will typically lead to an unwanted service delay.

Typically user equipment are not operable to acquire a common EDCH until internal user equipment (UE) signaling indicates to the UE that it has uplink data or signalling in a buffer to transfer to a base station. As a consequence, if a downlink message from a base station to user equipment requires feedback or response on a RACH/FACH UE is not typically immediately operable to provide that feedback or response and has to wait to acquire a common channel, for example, E-DCH until it successfully decodes the downlink message and implements an internal triggering process to enable uplink transmissions.

Such UE behavior may cause unwanted service delay. In most cases, downlink data transfer to user equipment will trigger an uplink data or feedback message transfer (for example: PS I/B and SRB 2-4 uses RLC-AM, and L2 ACK is needed for user traffic; CCCH and SRB1 messages use RLC-UM, and normally require response, such as RRC Connection Setup, Cell / URA Update Confirm).

Thus typical UE behavior according to which a common EDCH is only acquired after a long internal trigger process can result in unnecessary latency for UE uplink common E-DCH transfer (i.e. "Time to First Byte"/time to data traffic transmission) together with an unwanted delay in UE feedback (for example, ACK/CQI) transmission.

According to methods described, a UE may be operable to implement methods of establishing communications links which allow early and proactive common EDCH acquisition. Such methods aim to minimise both uplink and downlink service delay, particularly in cases where user equipment is operable to autonomously decide a downlink transmission is likely to cause an uplink transmission from user equipment as a response. Advanced aspects described herein aim to optimising user equipment behaviour by enabling cross-layer interactions.

Methods may also enable stand-alone triggering of feedback information to be sent on a channel, for example an HS-DPCCH channel, rather than requiring a feedback channel piggybacks on a data transmission channel. Such methods also enable a reduction in latency experienced when a user equipment returns feedback. More rapidly returned feedback allows for more efficient downlink transmission and system resource usage.

### Background

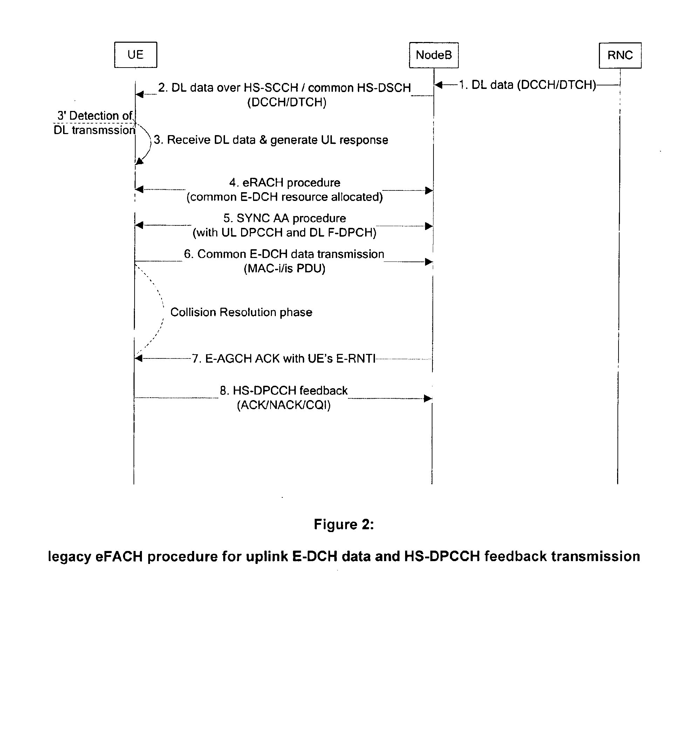

Figure 2 illustrates schematically, by means of a network signalling diagram, a method of acquiring a common channel in a wireless communication network. According to current 3GPP standards for enhanced uplink for user equipment operating in a CELL_FACH state or idle mode, whenever user equipment would like to use an uplink common channel (for example, E-DCH) to send data or to use a feedback channel (for example, HS-DPCCH) to send feedback for a downlink transmission (for example, an HS-DSCH transmission) it must first acquire an allocation of a common channel resource from a base station. It achieves this via eRACH and Synchronisation AA procedures which set up uplink and downlink physical channels first (for example, DPCCH downlink F-DPCH). This procedure is shown schematically in Figure 2. Only after user equipment obtains uplink synchronisation on an uplink physical channel (for example, DPCCH) can it reliably begin data and feedback transmissions (for example, UL E-DCH and HS-DPCCH transmissions).

### Overview of Embodiments

According to a first embodiment, upon the detection of a downlink transmission, user equipment is operable to immediately start common channel (for example, E-DCH) acquisition for transition of uplink data traffic. That acquired common channel (for example, E-DCH) may also be utilised to implement standalone feedback, for example, on an HS-DPCCH.

According to such an embodiment, user equipment is operable to establish a common channel resource (for example, E-DCH resource) and perform downlink F-DPCH / uplink DPCCH transmission in a pro-active way. Such a method may allow, in some embodiments, user equipment to perform two tasks independently from one another. Namely, such user equipment is operable to transmit uplink physical/pilot channel feedback alone if uplink data transmission is not available, and transmit feedback and send data on a common channel if uplink data becomes available. According to some embodiments, an existing common channel (for example, E-DCH) transmission continuation back off timer can be used to retain an acquired common channel. That back off timer provides an engineering parameter tunable to suit specific network traffic patterns.

By establishing acquisition of a common channel as soon as a downlink transmission is received, rather than requiring a further internal triggering process to be activated, benefits of latency reduction can be gained for both uplink data transmission and feedback transmissions.

By taking steps to acquire a common channel immediately on reception of a downlink transmission, latency of uplink data transmission from user equipment is reduced since the common channel resource process is brought forward and it is likely that by the time there is data to transmit, a common channel has already been allocated by a base station to user equipment, and the user equipment may have taken all steps to ensure that common channel is ready for use. Furthermore, by bringing forward common channel (for example: eRACH/SYNC AA/common E-DCH) acquistion, the corresponding delay in downlink channel (for example, HS-DPCCH) feedback may also be reduced correspondingly.

Such an embodiment offers back-compatability with existing network procedures, and thus minimises impact on existing 3GPP standards and maximises usage of existing eRACH/eFACH procedures. It requires no change to base station operation and only a minor update of user equipment operation.

In a further embodiment, upon detection of a downlink transmission, user equipment is operable to commence immediate common channel acquisition and utilise that acquired common channel resource in the same manner as described above. However, new stand-alone feedback functionalities may be implemented.

Typically HS-DPCCH feedback starts only after a collision resolution phase in establishing common channel acquisition. That phase ensures (when more than one user equipment is attempting to obtain a given common channel) that any possible ambiguity regarding which user equipment has been successfully allocated a common channel is resolved prior to user equipment beginning transmissions. Typical operation allows feedback to piggyback on a common data channel (for example, HS-DPCCH is associated with common E-DCH). Thus, once a base station successfully receives an uplink message on the common channel which includes a user equipment unique uplink identity, a base station is operable to work out which specific UE is occupying the common channel, and thus the associated feedback channel. Thus any ambiguity is removed. According to some embodiments, feedback may be provided in a manner that does not piggyback upon data traffic transmissions on a common channel. Such embodiments require that other means must be found to identify which specific user equipment is using a given shared or common channel on which to send feedback to a base station.

### Standalone Feedback: PCI Re-interpretation

In one embodiment, it is assumed that MIMO techniques will not be utilised in respect of user equipment operating in a CELL_FACH state. A PCI field (2-bit) is provided for MIMO when user equipment is operating in MIMO in a Cell_Dch state. That PCI field can be reused and re-interpreted for user equipment operating in a Cell_Fach state to indicate user equipment identity.

For example, PCI "00" (or any permutation out of 00, 01, 10, 11) for user equipment operating according to an eFACH state shall be re-interpreted at a base station as being indicative of , for example, *"Remaining MSB (Most Significant Bit) 16bits out of 18-bit ACK-CQI field is E-RNTI*". The remaining permutation of the 2-bit PCI field can be reserved for other use.

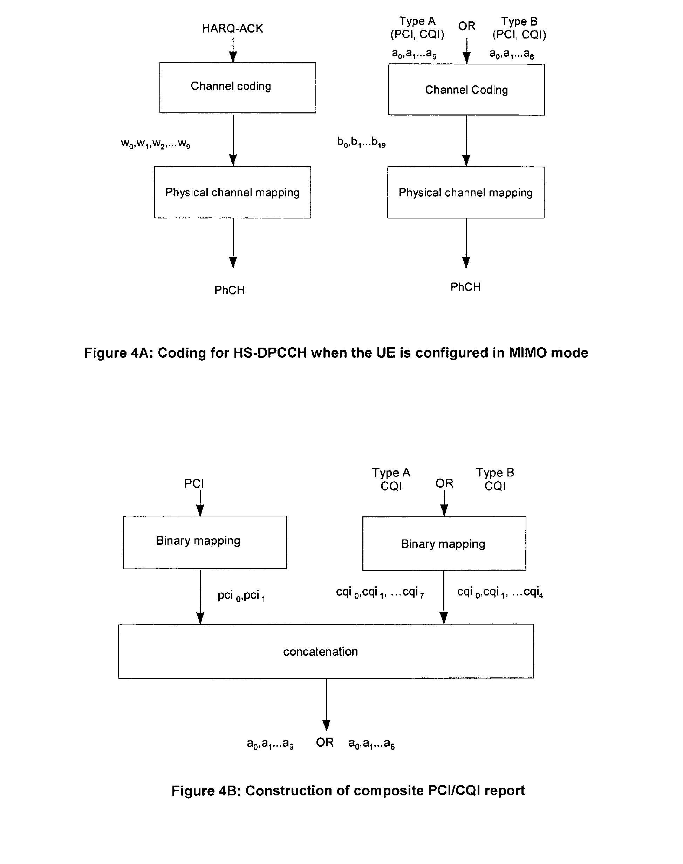

Figure 4a and Figure 4b illustrate schematically a method of coding information at user equipment. Figure 4a illustrates coding which occurs at user equipment for a feedback channel (in this case, HS-DPCCH) whilst user equipment operates in MIMO mode. In particular, PCI, CQI and ACK messages are coded onto an HS-DPCCH. Figure 4b illustrates constrcction at user equipment of a composite PCI/CQI report. A 2-bit field is only used in a CELL_DCH state when user equipment is using MIMO operation. Whilst in a CELL_FACH state that 2-bit PCI field may be reinterpreted to provide an indication of user equipment identity.

Embodiments may thus allow user equipment to operate to provide "early" feedback on a stand-alone HS-DPCCH, by ensuring that user equipment is operable to send a "UE-ID" HS-DPCCH message to a base station, such that the base station knows that user equipment (identified by its E-RNTI) is using the stand-alone HS-DPCCH channel to transmit feedback. Accordingly, user equipment can then send normal ACK/NACK/CQI message on a stand alone HS-DPCCH.

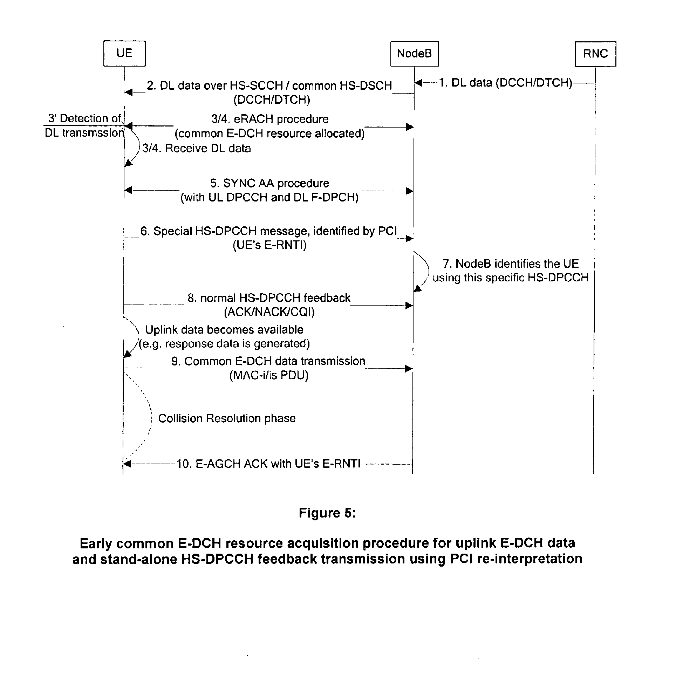

Figure 5 illustrates schematically, by means of a network signalling diagram, a method of acquiring a common channel in a wireless communication network according to one embodiment. In particular, Figure 5 illustrates how early common E-DCH resource can be used for uplink data transmission on a common channel (in the illustrated case, an E-DCH channel) and indicates signalling from user equipment to a base station (see step 6) to set up standalone feedback by reusing PCI coding bits.

### Secondary HS-DPCCH

According to some embodiments, user equipment is operable to use a secondary feedback channel (HS-DPCCH_2) in addition to a first feedback channel (HS-DPCCH_1). The secondary feedback channel is created and used to transfer a user equipment identifier (e.g. E-RNTI) to a base station. That second feedback channel may be provided for user equipment operating according to a multi channel regime when in a cell_DCH state. Multi channel operation will never be used whilst user equipment is in a CELL_FACH state and any such secondary feedback channel becomes available for reuse in user equipment CELL_FACH state to carry a user equipment identity (for example, E-RNTI).

The secondary HS-DPCCH has the exactly same format as the current first HS-DPCCH: the same 128 SF, the same uplink scrambling code, the same channelisation code C_{ch, 128, 16}, the same format for ACK/CQI/PCI information field, etc. However, HS-DPCCH_1 and HS-DPCCH_2 are transmited on Q and I respectively so that a base station can that the feedback channels belong to the same user equipment.

According to such an embodiment, 16-bits out of an available 20-bit information field on the feedback channel (for example, HS-DPCCH) are used to convey user equipment identity (for example, E-RNTI). Since HS-DPCCH_1 and HS-DPCCH_2 are transmitted on branch Q and I using the same uplink scrambling code, correlation at the base station ensures that feedback transferred on HS-DPCCH_1 identified as being from a specific user equipment can be conveyed directly to feedback received on HS-DPCCH_2.

Thus if user equipment is operable to implement a method which provides for early feedback on a stand-alone feedback channel, for example, HS-DPCCH, that user equipment operates to sends a UE identifier (e.g. E-RNTI) on the second feedback channel, for example, HS-DPCCH_2, to a base station.

In some embodiments, in order to increase such message reception reliability at a base station, a UE can repeat the transmission of UE-identifier (for exmple, E-RNTI) several times on the second feedback channel (for example, HS-DPCCH_2). In other embodiments, the user equipment may be operable to periodically send the UE-identifier on the second feedback channel. After a predetermined time period, user equipment may be operable to assume that the base station has received its UE-identifier (for example, E-RNTI) on the second feedback channel and begin sending normal ACK/NACK/CQI feedback on the 1^{st} HS-DPCCH after expiration of that predetermined time period.

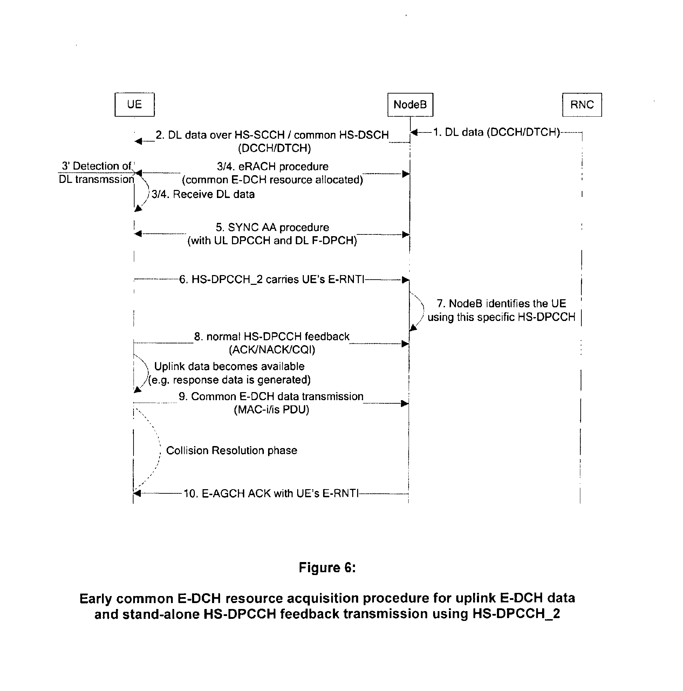

Figure 6 illustrates schematically, by means of a network signalling diagram, a method of acquiring a common channel in a wireless communication network according to one embodiment in which a first and second stand alone feedback channel is provided.

If establishment of a stand alone feedback channel is unsuccessful, embodiments may be operable to provide re-use of a feedback channel which piggybacks on a common data channel.

All embodiments support implicit release of both acquired common data and feedback channels (E-DCH and HS-DPCCH) based upon UL inactivity. All embodiments also support explicit release of common data and feedback channels held by user equipment if a base station instructs release. In such a case, a base station is operable to send appropriate release messaging to user equipment.

According to a further embodiment, user equipment is operable to commence common channel acquisition procedures in dependence upon a determined downlink message type determined by the user equipment. For example, user equipment may be operable to start eRACH / SYNC AA and acquire common EDCH resource as soon as it is scheduled by HS-SCCH indication for HS-DSCH reception.

According to some embodiments "early acquistion" shall be performed only when there is an anticipated need for an uplink resource due to the nature of a determined message flow and/or uplink load. For example, if user equipment is expecting continued uplink or downlink activity, early acquisition techniques may be triggered. If user equipment receives an indication that large amount of downlink data is expected and will last for a while, or the user equipment has transmitted an RRC Connection Request in middle of RRC Connection Setup procedure, early acquisition techniques allow for reduced delay in transmission of follow-up uplink messages (for example, RRC Connection Setup Complete and data traffic) via acquired common channel resource (for example, common E-DCH) and uplink feedback (via, for example, HS-DPCCH) is established.

According to some embodiments, if user equipment does not anticipate a need for uplink resource, the user equipment may be operable to prevent, or not initialise, early acquisition. For example, if user equipment is operable to send a periodical Cell Update, it typically expects a single "Cell Update Confirm" message followed by no further uplink or downlink messages. In such a case, user equipment is operable such that if user equipment detects reception of a downlink transmission it can guess that it is likely to be a CUC transmission and thus there may be no need to commence early common resource acquisition.

Such embodiments allow user equipment to implement service-aware cross-layer optimisation techniques in relation to early common channel acquisition techniques.

In some embodiments, if user equipment is anticipating a service reply message in the downlink (for example, a Cell Update Confirm - CUC), even if it does not detect a message from a base station when expected, it may be operable to start early common channel acquistion when a context timer expires. In particular, a problem with detected HS-SCCH/HS-DSCH is that, due to an absence of CQI or in a case where a link between is experiencing a bad radio condition, the HS-SCCH/HS-DSCH may not be detected. Then the UE may not know there was a HS-SCCH. According to embodiments in which a context timer is provided, even if user equipment fails to detect a HS-SCCH/HS-DSCH, it is operable to begin common channel acquisition. Useful feedback provided via early common E-DCH acquisition can, in turn, help improve downlink transmission quality for successful communication links without service interruption.

### Example Embodiments

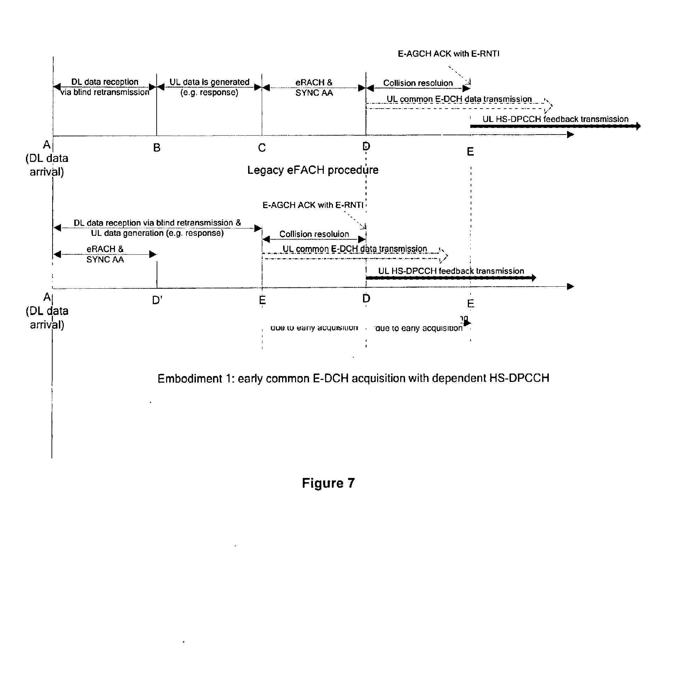

Figure 7 illustrates schematically a method of acquiring a common channel in a wireless communication network. The top axis of Figure 7 illustrates a legacy common channel acquisition procedure implemented at user equipment operating in Cell_FACH. At point A (downlink data arrival) the user equipment receives data from a base station. Because the base station is not receiving feedback from the user equipment, it continues to send downlink data via blind retransmission. That process can be wasteful of network resource. The user equipment is operable to generate a response to the downlink data received (between point B and point C) and initiate a common resource acquisition procedure (between point C and point D). At point D, the user equipment has acquired a common channel and begins uplink data transmission. Once data transmission has commenced, the base station is operable to perform a collision resolution procedure. Once potential collisions have been resolved, the user equipment is operable (at point E) to begin feedback transmission on an uplink HS-DPCCH.

The lower axis illustrates schematically, and generally, an early acquisition procedure according to embodiments. Upon the detection of a downlink transmission, user equipment immediately starts acquisition of a common resource (shown as an eRACH and SYNC AA procedure). Such early resource acquisition saves time, compared with the legacy method shown on the upper axis, and reduces delay for both uplink data and feedback delivery to the base station.

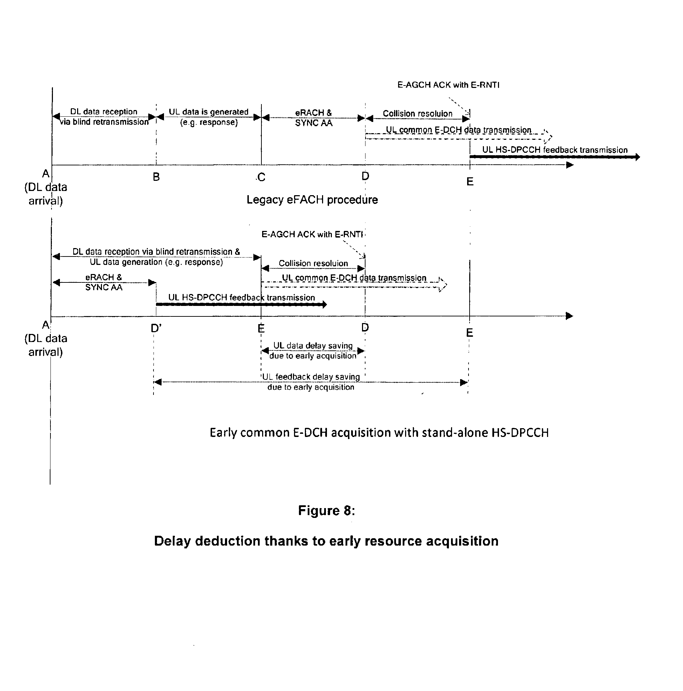

Figure 8 illustrates schematically a method of acquiring a common channel in a wireless communication network according to one embodiment. Similar reference letters to those used in Figure 7 are used throughout Figure 8 as appropriate. In the arrangement illustrated in Figure 8, more reduction for HS-DPCCH feedback delay is obtained compared to the method illustrated in Figure 7 since stand-alone feedback channels (which can be traced in themselves to a particular user equipment) are provided. That is, by the point D/D' (i.e. the point at which initial acquisition of a common channel is completed via an eRACH/SYNC AA process) both data and feedback transmissions, on common E-DCH and HS-DPCCH respectively, are available and ready. By de-coupling feedback from data transmission and decoupling the collision resolution phase for each of those transmissions, more timely feedback can be provided to a base station thereby increasing system resource usage efficiency since feedback retransmission replaces blind retransmission.

Some embodiments provide user equipment which is operable to make assessments of upcoming data traffic whilst the user equipment operates in a CELL_FACH state. Such user equipment is operable to display a degree of service anticipation and inter user equipment cross-layer interaction. Accordingly, such embodiments provide user equipment which are operable to prevent acquisition of system common channels if it does not anticipate any service response in uplink.

A system incapable of "service anitipication" may cause unwanted waste. For example, in order to implement periodic cell update, a UE sends a CU and expects CUC from a base station in return. However, the UE is not anticipating any further UL transmission. According to some less intelligent embodiments described herein, a UE will be operable to start early common channel acquisition, despite the fact no data or feedback is required by the base station in return. In such a case the user equipment will typically have received a CUC before uplink SYNC-UP is completed.

In such a case, taking downlink and uplink at the user equipment in turn:
A. HS-DSCH detected D: Periodical CUC is received before SYNC AA DL: <--------------------------------->
A': start eRACH at once B:eRACH & SYNC AA is done, but nothing to send UL: <---------------------------------><---------

In embodiments in which user equipment has some knowledge of likely future data traffic, user equipment may send a CU and is operable to expect CUC as a return. The user equipment according to some embodiments may be aware that it is expecting a periodic message in the downlink and that there is no need to perform an uplink transmission in response. The UE is operable not to perform early eRACH and common E-DCH acquistion since it determines that such a method is unlikely to aid overall operation. Thus unnecessary EDCH resource occupancy may be reduced.

In such a case, taking downlink and uplink at the user equipment in turn:
A. Active HS-DSCH detected D: Periodical CUC is received DL: <---------------------------------->
A': UE decides **not** to start early EDCH acquisition as no further service is anticipated UL: <--------------------------------------------------

In some embodiments, user equipment operates in a smarter manner by enabling interactions between L1/L2 and higher layer (for example, RRC). In such embodiments, even if no downlink transmission is detected, the user equipment may be aware that, for example, a predicted event did not occur, and quickly acquire common channel resource (for example, E-DCH) to solve this problem.

For example, without such intelligence a UE may be expecting CUC (Cell Update Confirm) after sending CU. However, due to bad radio conditions no HS-SCCH/HS-DSCH is detected by user equipment despite a base station transmitting it. After expiration of timer at the user equipment, the UE has to re-send another CU, which causes a significant delay and service interruption

In such a case, taking downlink and uplink at the user equipment in turn:
D: HS-SCCH/HS-DSCH for CUC cannot be detected DL: <------------------------->
A.CU is sent B. T302 expires, triggering abnormal handling UL: <---------------------------------------------------->

With such intelligence, a UE is operable to expect a CUC after it sends out a CU message. Typically such a CUC message will be returned by a network to the UE within 200ms (> 95% probability). Thus, once a UE transmits a CU message, it starts a context timer. If the timer expires and UE still has not detected any HS-SCCH / HS-DSCH, the UE is operable to pro-actively initiate an eRACH and starts to provide CQI feedback on HS-DPCCH. On reception of CQI from the user equipment, a base station can determine that it sent the previous transmission at a power which was too low to reach the user equipment and then adjust its transmission power to ensure the next HS-SCCH/HS-DSCH transmission to the user equipment is successfully detected at the UE, and service continues normally.

In such a case, taking downlink and uplink at the user equipment in turn:
D: HS-SCCH/HS-DSCH for CUC cannot be detected E: CUC is decoded DL: <-----><---------------------------------><-----
A.CU is sent B. Context timer expires, triggering early eRACH C: return CQI UL: <-------------------------><-------------------------------------------------------------><-----------

Embodiments allow new interactions between L1/L2 and upper layers, for example, RRC layers, within user equipment. Such interactions may allow for more intelligent, holistic user equipment operation within a network, thereby providing a faster service response and more reliable data delivery by employing a cross-optimisation philosophy. Wireless network Key Performance Indicators are improved and a better smartphone end user experience may be achieved.

Aspects enable early feedback to improve downlink transmission reliability and reduce time to first byte delays.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of establishing a communication link between a network access node and user equipment on at least one common radio channel in a wireless telecommunication network, said method comprising:
receiving a data transmission from said network access node;
directly triggering, within user equipment layer one, initiation of a request for establishment of communication with said network access node on said at least one common radio channel; and
transmitting said request to said network access node.

2. A method according to claim 1, wherein said user equipment is operating in a Cell_FACH RRC state.

3. A method according to claim 1 or claim 2, comprising:
bypassing indirect multi-layer user equipment of initiation of a request for establishment of communication with said network access node on said at least one common radio channel.

4. A method according to any preceding claim, wherein said request comprises a request for establishment of communication on at least one common radio channel configured for transmission of uplink data traffic.

5. A method according to any preceding claim, wherein said request comprises a request for establishment of communication on at least one common radio channel configured for transmission of downlink feedback information.

6. A method according to claim 5, wherein said at least one common radio channel configured for transmission of downlink feedback information is associated with at least one common radio channel configured for transmission of uplink data traffic.

7. A method according to any preceding claim, wherein said request for establishment comprises an indication of a unique user equipment identifier.

8. A method according to claim 7, wherein said request for establishment comprises an indication of a unique user equipment identifier for each least one common radio channel requested.

9. A method according to any preceding claim, wherein an indication of a unique user equipment identifier is encoded within a transmission to be made on said least one common radio channel requested.

10. A method according to any preceding claim, wherein said request comprises an indication of a unique user equipment identifier is encoded within a physical control channel message.

11. A method according to any preceding claim, wherein said request comprises an indication of a unique user equipment identifier is encoded within an unused feedback common radio channel associable with said user equipment.

12. A method according to any preceding claim, comprising:
determining whether initiation of said request is required based on a determination of a nature of said data transmission received from said network access node.

13. A method according to any preceding claim, comprising:
predicting, based on transmissions received and transmitted by said user equipment, that reception of said data transmission is expected and triggering said initiation of a request for establishment of communication with said network access node on said at least one common radio channel based upon said prediction.

14. A computer program product operable, when executed on a computer, to perform the method of any one of claims 1 to 13.

15. User equipment operable to establish a communication link with a network access node on at least one common radio channel in a wireless telecommunication network, said user equipment comprising:
reception logic operable to receive a data transmission from said network access node;
triggering logic operable to directly trigger, within user equipment layer one, initiation of a request for establishment of communication with said network access node on said at least one common radio channel; and
transmission logic operable to transmit said request to said network access node.

## Amended claims

### Amended claims in accordance with Rule 137(2) EPC.

**1.** A method of establishing a communication link between a network access node (20) and user equipment (50) operating in a Cell_FACH RRC state on at least one common radio channel in a wireless telecommunication network (10), said method comprising:
receiving a data transmission from said network access node (20);
directly triggering, within user equipment (50) layer one, initiation of a request for establishment of communication with said network access node (20) on said at least one common radio channel; and
transmitting said request to said network access node (20).

**2.** A method according to claim 1, comprising:
bypassing indirect multi-layer user equipment initiation of a request for establishment of communication with said network access node (20) on said at least one common radio channel.

**3.** A method according to any preceding claim, wherein said request comprises a request for establishment of communication on at least one common radio channel configured for transmission of uplink data traffic.

**4.** A method according to any preceding claim, wherein said request comprises a request for establishment of communication on at least one common radio channel configured for transmission of downlink feedback information.

**5.** A method according to claim 4, wherein said at least one common radio channel configured for transmission of downlink feedback information is associated with at least one common radio channel configured for transmission of uplink data traffic.

**6.** A method according to any preceding claim, wherein said request for establishment comprises an indication of a unique user equipment (50) identifier.

**7.** A method according to claim 6, wherein said request for establishment comprises an indication of a unique user equipment identifier for each least one common radio channel requested.

**8.** A method according to any preceding claim, wherein an indication of a unique user equipment identifier is encoded within a transmission to be made on said least one common radio channel requested.

**9.** A method according to any preceding claim, wherein said request comprises an indication of a unique user equipment identifier is encoded within a physical control channel message.

**10.** A method according to any preceding claim, wherein said request comprises an indication of a unique user equipment identifier is encoded within an unused feedback common radio channel associable with said user equipment (50).

**11.** A method according to any preceding claim, comprising:
determining whether initiation of said request is required based on a determination of a nature of said data transmission received from said network access node (20).

**12.** A method according to any preceding claim, comprising:
predicting, based on transmissions received and transmitted by said user equipment (50), that reception of said data transmission is expected and
triggering said initiation of a request for establishment of communication with said network access node (20) on said at least one common radio channel based upon said prediction.

**13.** A computer program product operable, when executed on a computer, to perform the method of any one of claims 1 to 12.

**14.** User equipment (50) operating in a Cell_FACH RRC state, operable to establish a communication link with a network access node (20) on at least one common radio channel in a wireless telecommunication network, said user equipment (50) comprising:
reception logic operable to receive a data transmission from said network access node (20);
triggering logic operable to directly trigger, within user equipment (50) layer one, initiation of a request for establishment of communication with said network access node (20) on said at least one common radio channel; and
transmission logic operable to transmit said request to said network access node (20).
